# EUROPÄISCHE PATENTSCHRIFT

(11) **EP 4 204 712 B1**
(45) Veröffentlichungstag und Bekanntmachung des Hinweises auf die Patenterteilung: **25.12.2024**
(21) Anmeldenummer: 21763054.0
(22) Anmeldetag: 13.08.2021
(51) Int. Cl.: F16G 11/12, B60P 7/08

(54) **SPANNVORRICHTUNG ZUM SPANNEN VON KETTEN, BÄNDERN, SEILEN ODER DERGLEICHEN SPANNMITTELN**
TENSIONING DEVICE FOR TENSIONING CHAINS, STRAPS, ROPES OR SIMILAR TENSIONING MEANS
DISPOSITIF DE TENSION POUR TENDRE DES CHAÎNES, DES SANGLES, DES CORDES OU DES MOYENS DE TENSION SIMILAIRES

(30) Priorität: 26.08.2020 DE 202020104941 U
(43) Veröffentlichungstag der Anmeldung: 05.07.2023
(73) Patentinhaber: Westdeutscher Drahtseil-Verkauf Dolezych GmbH & Co. KG, 44147 Dortmund (DE)
(72) Erfinder: DOLEZYCH, Tim, 44225 Dortmund (DE)
(74) Vertreter: Andrejewski - Honke Patent- und Rechtsanwälte Partnerschaft mbB
(86) Internationale Anmeldenummer: PCT/EP2021/072644
(87) Internationale Veröffentlichungsnummer: WO 2022/043104

(56) Entgegenhaltungen:
- CN-B- 1 676 969
- ES-U- 296 745
- KR-B1- 101 835 121

## Beschreibung

Die Erfindung betrifft eine Spannvorrichtung zum Spannen von Ketten, Bändern, Seilen oder dergleichen Spannmitteln, mit wenigstens einer rohrförmigen Spannmutter sowie zumindest einem in die Spannmutter eintauchenden und mit ihr wechselwirkenden Gewindebolzen, wobei die Spannmutter und/oder der Gewindebolzen mit einem endseitigen Anschlusselement insbesondere zur Kopplung mit dem Spannmittel ausgerüstet ist, und wobei das Anschlusselement beweglich mit der Spannmutter und/oder dem Gewindebolzen verbunden ist.

Solche Spannvorrichtungen werden typischerweise im Bereich der Hebe- und Transporttechnik, also allgemein der Logistik eingesetzt. Bei dem auf diese Weise zu spannenden Spannmittel handelt es sich üblicherweise um Ketten, Bänder, Seile oder vergleichbare Spannmittel. Mit ihrer Hilfe lässt sich beispielsweise Ladegut auf Transportflächen von Transportfahrzeugen sichern. Als denkbare Transportfahrzeuge kommen LKW-Auflieger, Anhänger, Zuganhänger etc., aber auch Ladeplattformen für Schiffe, Container etc. zum Einsatz.

Aufgrund der geschilderten Einsatzgebiete müssen oftmals hohe Spannkräfte mit Hilfe der Spannvorrichtung auf das Spannmittel ausgeübt werden. Dazu kann die Spannvorrichtung beispielsweise einseitig an das Spannmittel angeschlossen sein und mit seinem anderen Ende auf oder an der Ladefläche an einem Befestigungspunkt fixiert werden. Es ist aber auch möglich, dass die Spannvorrichtung beidseitig an ein Spannmittel angeschlossen wird, um die nötige Zurrkraft zur Sicherung der Ladung auf der Transportfläche im Beispielfall zur Verfügung zu stellen.

Spannvorrichtungen werden beispielsweise in den beiden Vorveröffentlichungen WO 2018/073098 A1 oder auch der US 4 130 269 beschrieben. Die bekannten Spannvorrichtungen haben sich bewährt, wenn es darum geht, beispielsweise Stahlketten als Spannmittel zu spannen und mit der notwendigen Spannkraft auszurüsten.

In der Praxis und zunehmend kommen an Stelle solcher Stahlketten mit geschmiedeten Kettengliedern auch sogenannte textile Ketten zum Einsatz, wie sie in der DE 20 2018 105 723 U1 der Anmelderin im Detail beschrieben werden. Bei solchen textilen Ketten als Spannmittel besteht das Problem, dass beim Betätigen der rohrförmigen Spannmutter mit Hilfe beispielsweise einer Ratsche Torsionen innerhalb des Spannmittels bzw. der textilen Kette entstehen können. Diese Torsionen haben zur Folge, dass einerseits ein relativ großer Bestandteil des von der Spannvorrichtung zur Verfügung gestellten Weges schlicht und ergreifend dadurch verloren geht, dass die fragliche textile Kette tordiert wird. Das heißt, für den eigentlichen Spannvorgang steht ein verringerter Spannweg zur Verfügung.

Gravierender und wesentlich ist jedoch andererseits der Umstand, dass durch die in die textile Kette eingetragenen Torsionen die Gefahr besteht, dass beispielsweise eine an der Spannmutter angreifende Ratsche zu ihrer Spannung nach Ende eines Spannvorganges aufgrund der in die textile Kette eingetragenen Torsionen "zurückschlägt". Das kann im schlimmsten Fall zu Verletzungen einer Bedienperson führen, sind darüber hinaus Beschädigungen aufgrund der schlagenden Ratsche zusätzlich möglich. Neben diesem Rückschlageffekt und der Verletzungsgefahr für einen Bediener ergibt sich als weiteres Risiko, dass nach dem Spannvorgang und bei beispielsweise losgelassener Ratsche die zuvor eingebrachte Vorspannkraft auf ein deutlich geringeres Niveau zurückfällt.

Derartige Probleme treten bei Stahlketten mit geschmiedeten Kettengliedern aufgrund ihrer verringerten bzw. gar nicht beobachteten Torsion in der Praxis nicht oder kaum auf. Durch den zunehmenden Einsatz an sich vorteilhafter textiler Ketten in der Praxis ergeben sich in Verbindung mit den bisherigen Spannvorrichtungen allerdings die geschilderten Probleme und steigt die Verletzungsgefahr.

Der gattungsbildende Stand der Technik nach der ES 296 745 U arbeitet zu diesem Zweck mit einem drehbeweglichen Anschlusselement, welches mit einer zugehörigen Spannmutter verbunden ist. Die zuvor beschriebenen Probleme sind hierdurch allerdings nicht wesentlich gelöst worden. Das gilt auch für den weiteren Stand der Technik nach der KR 101 835 121 B1.

Der Erfindung liegt das technische Problem zugrunde, eine derartige Spannvorrichtung zum Spannen von Ketten, Bändern, Seilen oder dergleichen Spannmitteln so weiter zu entwickeln, dass etwaige Torsionen im Spannmittel beherrscht werden und insbesondere die Verletzungsgefahr für einen Bediener verringert ist.

Zur Lösung dieser technischen Problemstellung schlägt die Erfindung bei einer gattungsgemäßen Spannvorrichtung zum Spannen von Ketten, Bändern, Seilen oder dergleichen vor, dass das Anschlusselement drehbar in einem Anschlussblock aufgenommen wird, der endseitig in die Spannmutter und ein hierin vorhandenes Innengewinde eingeschraubt ist, wobei am anderen Ende der Spannmutter ebenfalls ein Außengewinde des in die Spannmutter eintauchenden und mit ihr wechselwirkenden Gewindebolzens mit dem Innengewinde wechselwirkt, und wobei der Anschlussblock in seinem Innern mit einem Lager bzw. Drehlager ausgerüstet ist.

Die Erfindung geht zunächst einmal von der grundsätzlichen Erkenntnis aus, dass die fragliche Spannvorrichtung mit wenigstens einem Anschlusselement zur Kopplung mit dem Spannmittel ausgerüstet ist. Dabei kann das Anschlusselement grundsätzlich an der Spannmutter, dem Gewindebolzen oder auch sowohl an der Spannmutter als auch dem Gewindebolzen vorgesehen und realisiert werden. Das ist der Tatsache einer flexiblen Anordnung der Spannvorrichtung und flexiblen Auslegung des Spannmittels geschuldet. So kann beispielsweise ein Ende der Spannmutter fest mit einer Transportfläche verbunden werden, wohingegen das andere Ende der Spannmutter mit dem hierin eintauchenden Gewindebolzen ausgerüstet wird.

Sofern an diesen Gewindebolzen beispielhaft eine textile Kette vergleichbar der einleitend bereits angesprochenen DE 20 2018 105 723 U1 der Anmelderin angeschlossen wird, kann beispielsweise der Gewindebolzen mit dem endseitigen beweglichen Anschlusselement zur Kopplung mit dem Spannmittel ausgerüstet werden. Alternativ kann auch die Spannmutter ein solches Anschlusselement aufweisen. Jedenfalls führt die bewegliche Auslegung des Anschlusselementes zur Kopplung mit dem Spannmittel insgesamt dazu, dass die erfindungsgemäße Spannvorrichtung ausdrücklich beim Spannen keine Torsionen in das Spannmittel einträgt. Vielmehr sorgt die bewegliche Auslegung des Anschlusselementes dafür, dass solche Torsionen von vornherein vermieden werden. Dabei ist erfindungsgemäß die Auslegung so getroffen, dass das Anschlusselement drehbar mit der Spannmutter verbunden ist. Dabei ist das Anschlusselement im Allgemeinen um eine in Längsrichtung verlaufende Achse drehbar ausgebildet. Die Achse fällt dabei meistens mit der Längsachse der Spannmutter und/oder des Gewindebolzens zusammen.

Außerdem ist die Auslegung darüber hinaus so getroffen, dass das Anschlusselement unter Zwischenschaltung eines Lagers mit der Spannmutter und/oder dem Gewindebolzen gekoppelt ist. Das Lager ist dabei üblicherweise kopfseitig in die Spannmutter und/oder den Gewindebolzen eingesetzt. Bei dem Lager handelt es sich meistens um ein Drehlager.

An dieser Stelle haben sich grundsätzlich sämtliche denkbaren Varianten von Drehlagern als günstig erwiesen. Tatsächlich kann es sich bei dem Drehlager um ein Kugellager, ein Wälzlager, ein Gleitlager etc. einzeln oder in Kombination handeln. Das Anschlusselement mag beispielhaft als Anschlussöse ausgebildet sein, kann aber auch als Anschlusshaken oder auch Kombinationen ausgeführt werden.

Darüber hinaus ist meistens wenigstens eine an die Spannmutter angeschlossene Ratsche vorgesehen, um die erforderliche Spannkraft in die Spannmutter und folglich den Gewindebolzen einleiten zu können. Zusätzlich zu der Rasche ist meistens noch eine Fixiereinrichtung vorgesehen. Die Fixiereinrichtung mag dafür sorgen, dass bei Beaufschlagung der Ratsche die Spannmutter mit Hilfe der Fixiereinrichtung fixiert wird, folglich durch die Ratsche die erforderliche Spannkraft auf die Spannmutter übertragen werden kann.

Die Fixiereinrichtung kann dabei ganz generell am Gewindebolzen und/oder der Spannmutter angreifen. Im Regelfall ist jedoch die Spannmutter neben der Ratsche zusätzlich mit der Fixiereinrichtung ausgerüstet, bei der es sich vorteilhaft um einen Fixierhebel handeln kann. Das heißt, in diesem Fall greift die Fixiereinrichtung bzw. der Fixierhebel nicht am Anschlusselement an, sondern vielmehr an der Spannmutter selbst, und zwar ebenso wie die Ratsche an ihrem Außenumfang.

In jedem Fall sorgt die Fixiereinrichtung bzw. der Fixierhebel ganz generell und zumindest dafür, dass die Spannmutter beim Spannvorgang wenigstens in ihrem jeweiligen Umkehrpunkt bei der Beaufschlagung mit Hilfe der Ratsche fixiert wird. Tatsächlich erfolgt das Spannen mit Hilfe der Spannmutter und der Ratsche dergestalt, dass an die Ratsche beispielhaft eine Verlängerung als Handhabe bzw. Spannhebel angeschlossen wird. Bei der Betätigung der Spannmutter beispielsweise zum Spannen des über den Gewindebolzen angeschlossenen Spannmittels muss die Spannmutter in einer Betätigungsrichtung, beispielsweise in Stirnansicht im Uhrzeigersinn oder im Gegenuhrzeigersinn beaufschlagt werden. Dadurch kann der Gewindebolzen entsprechend zunehmend in die Spannmutter eintauchen. Als Folge hiervon wird das angeschlossene Spannmittel entsprechend mit der dadurch erzeugten Spannkraft beaufschlagt.

Um nun die zuvor bereits angesprochene und beispielhaft beschriebene Uhrzeigersinnbewegung der Spannmutter mit Hilfe der Ratsche bzw. des angeschlossenen Spannhebels auf die Spannmutter auszuüben, wird der Spannhebel beispielsweise vom ersten Umkehrpunkt bis zum zweiten Umkehrpunkt in Eingriff mit der Spannmutter bewegt. Während der Rückbewegung des Spannhebels vom zweiten Umkehrpunkt zum ersten Umkehrpunkt ist dagegen die Ratsche und folglich auch der Spannhebel nicht in Eingriff mit der Spannmutter. Damit nun die Spannmutter ausgehend vom zweiten Umkehrpunkt bei der Rückbewegung der Ratsche nicht durch beispielsweise Reibungskräfte zurückbewegt wird, sorgt die Fixiereinrichtung bzw. der Fixierhebel zumindest am zweiten Umkehrpunkt dafür, dass die Spannmutter in ihrer erreichten Position fixiert wird. Außerdem werden hierdurch etwaige Torsionskräfte beherrscht, die ohnehin erfindungsgemäß nicht vorliegen bzw. durch die drehbare Auslegung des Anschlusselementes vermieden werden.

Sobald nun die Ratsche und mit ihr der Spannhebel den ersten Umkehrpunkt erreicht hat, kann die Ratsche erneut am ersten Umkehrpunkt in Eingriff mit der Spannmutter kommen, so dass ausgehend hiervon die Spannmutter in der gleichen Betätigungsrichtung (im Uhrzeigersinn im Beispielfall) weiter gespannt werden kann. Sobald also die Ratsche und mit ihr der Spannhebel den ersten Umkehrpunkt erreicht haben, wird die Fixiereinrichtung bzw. der Fixierhebel gelöst, damit die Spannmutter ausgehend hiervon weiter in ihrer Betätigungsrichtung (im Uhrzeigersinn im Beispielfall) beaufschlagt werden kann.

Die Spannvorrichtung kann generell mit zwei in die Spannmutter eintauchenden und mit ihr wechselwirkenden Gewindebolzen ausgerüstet werden. Das heißt, hier ist eine Auslegung vergleichbar der einleitend bereits beschriebenen WO 2018/073098 A1 denkbar. In diesem Fall greifen die beiden Gewindebolzen in gegenläufige Gewindeabschnitte der Spannmutter ein und können grundsätzlich auch ineinander greifen.

Im Regelfall ist die erfindungsgemäße Spannvorrichtung jedoch lediglich mit einem (einzigen) Gewindebolzen ausgerüstet, welcher in die Spannmutter an ihrem einen Ende eintaucht. An ihrem anderen Ende ist dagegen das endseitige und drehbar mit der Spannmutter verbundene Anschlusselement realisiert. Dadurch kann mit Hilfe des einen (einzigen) Gewindebolzens das dort angeschlossene Spannmittel mit der erforderlichen Spannkraft ausgerüstet werden. Am endseitig der Spannmutter vorgesehenen und drehbar an die Spannmutter angeschlossenen Anschlusselement kommt es zugleich dazu, dass etwaige Torsionen im Spannmittel vermieden werden. Das gilt sowohl für den Fall, dass das endseitige Anschlusselement beispielsweise fest an einer Ladefläche fixiert wird als auch dann, wenn das endseitige Anschlusselement zusätzlich mit einem weiteren oder dem gleichen Spannmittel gekoppelt wird. Das heißt, im Rahmen einer besonders bevorzugten Variante wird nicht nur mit einem (einzigen) Gewindebolzen gearbeitet, sondern auch dergestalt, dass das Anschlusselement lediglich mit der Spannmutter verbunden ist, und zwar an ihrem dem (einzigen) Gewindebolzen gegenüberliegenden Ende. Grundsätzlich kann das Anschlusselement aber auch lediglich entweder mit der Spannmutter oder dem Gewindebolzen verbunden werden.

Im Ergebnis wird eine Spannvorrichtung zur Verfügung gestellt, die von vornherein und prinzipbedingt in das Spannmittel eingetragene Torsionen verhindert. Als Folge hiervon lässt sich das Spannmittel einwandfrei mit der erforderlichen Spannkraft ausrüsten, und zwar ohne dass es nach Wegfall der Spannkraft zu dem zuvor bereits und einleitend beschriebenen "Zurückschlagen" eines in der Regel vorgesehenen Spannhebels kommt. Etwaige Verletzungen einer Bedienperson werden damit ausdrücklich vermieden. Außerdem ist die erfindungsgemäße Spannvorrichtung mit dem Vorteil verbunden, dass die eingebrachte Vorspannkraft erhalten bleibt und nicht beispielsweise durch eine sich auflösende Torsion auf ein geringeres Niveau fällt. Das ist für eine sichere und dauerhafte Festlegung von Ladegütern auf einer Transportfläche von besonderer Bedeutung. Hierin sind die wesentlichen Vorteile zu sehen.

Im Folgenden wird die Erfindung anhand einer lediglich ein Ausführungsbeispiel darstellenden Zeichnung näher erläutert; es zeigen:
- Fig. 1: die erfindungsgemäße Spannvorrichtung in einer Übersicht,
- Fig. 2: einen vergrößerten Ausschnitt aus der Fig. 1 im Bereich des Anschlusselementes und
- Fig. 3: eine abgewandelte Variante der Spannvorrichtung nach der Fig. 1.

In den Figuren ist eine Spannvorrichtung zum Spannen von Ketten 1, Bändern, Seilen oder dergleichen Spannmitteln 1 wiedergegeben. Bei dem Spannmittel bzw. der Kette 1 handelt es sich im Ausführungsbeispiel um eine sogenannte textile Kette, wie sie in der einleitend bereits in Bezug genommenen und auf die Anmelderin zurückgehenden DE 20 2018 105 723 U1 im Detail beschrieben wird. Das heißt, die Kette 1 bzw. textile Kette setzt sich aus Kettengliedern zusammen, bei denen es sich jeweils um einen Ring aus geschlagenem Seilwerk auf Basis von Kunststofffäden handelt. Die Kunststofffäden selbst sind als Multifilamentfäden aus Kunststofffasern ausgebildet und auf Basis von Thermoplastfasern beispielsweise aus PE, PA, PET, PP usw. hergestellt.

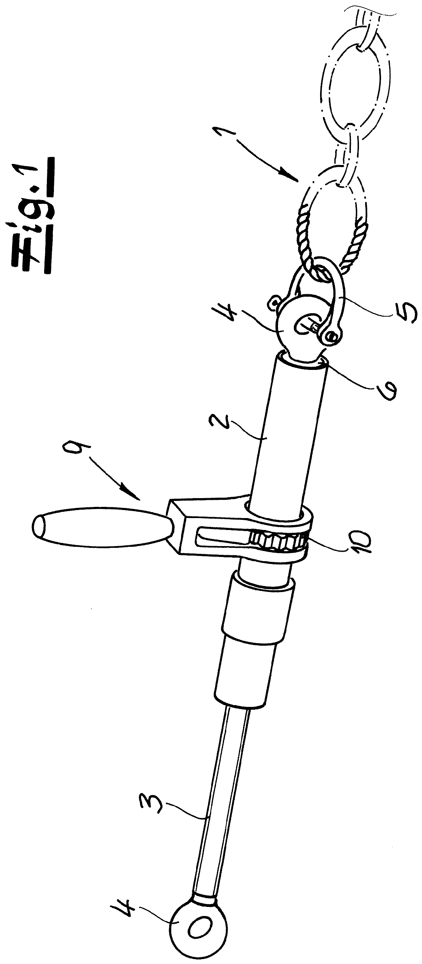

Die in der Übersicht nach der Fig. 1 dargestellte Spannvorrichtung zum Spannen der textilen Kette 1 im Beispielfall verfügt über wenigstens eine rohrförmige Spannmutter 2. In die rohrförmige Spannmutter 2 taucht zumindest ein mit ihr wechselwirkender Gewindebolzen 3 ein. Tatsächlich ist die Auslegung so getroffen, dass nach dem Ausführungsbeispiel die Spannmutter 2 mit dem lediglich einen (einzigen) Gewindebolzen 3 wechselwirkt, welcher in ein Ende der Spannmutter 2 eintaucht. Bei diesem Ende handelt es sich nach dem Ausführungsbeispiel um das linke Ende der rohrförmigen Spannmutter 2. Demgegenüber ist das andere (nach dem Ausführungsbeispiel rechte) Ende der Spannmutter 2 mit einem endseitigen Anschlusselement 4 ausgerüstet. Bei dem Anschlusselement 4 handelt es sich im Ausführungsbeispiel um eine Anschlussöse 4. Generell kann das Anschlusselement 4 aber auch als Anschlusshaken ausgebildet sein. Darüber hinaus kann das Anschlusselement bzw. die Anschlussöse 4 mit einem in der Fig. 1 angedeuteten Schäkel 5 gekoppelt werden, an den wiederum die textile Kette 1 im Beispielfall angeschlossen wird. Auch der Gewindebolzen 3 ist mit einem Anschlusselement 4 ausgerüstet, bei dem es sich ebenfalls um eine Anschlussöse 4 im Beispielfall und nicht einschränkend handelt.

Die Besonderheit der Erfindung ist nun darin zu sehen, dass das Anschlusselement 4 beweglich mit der Spannmutter 2 und/oder dem Gewindebolzen 3 verbunden ist. Das heißt, die Erfindung eröffnet grundsätzlich die Möglichkeit, das an den Gewindebolzen 3 angeschlossene Anschlusselement 4, das an die Spannmutter 2 angeschlossene Anschlusselement 4 oder beide Anschlusselemente 4 jeweils beweglich und insbesondere drehbar auszugestalten. Tatsächlich wird im Rahmen des Ausführungsbeispiels so vorgegangen, dass lediglich das endseitig an die Spannmutter 2 angeschlossene Anschlusselement bzw. die Anschlussöse 4 beweglich und drehbar ausgebildet ist, wohingegen der Gewindebolzen 3 mit einem demgegenüber festen Anschlusselement bzw. einer fest mit dem Gewindebolzen 3 verbundenen Anschlussöse 4 ausgerüstet wird.

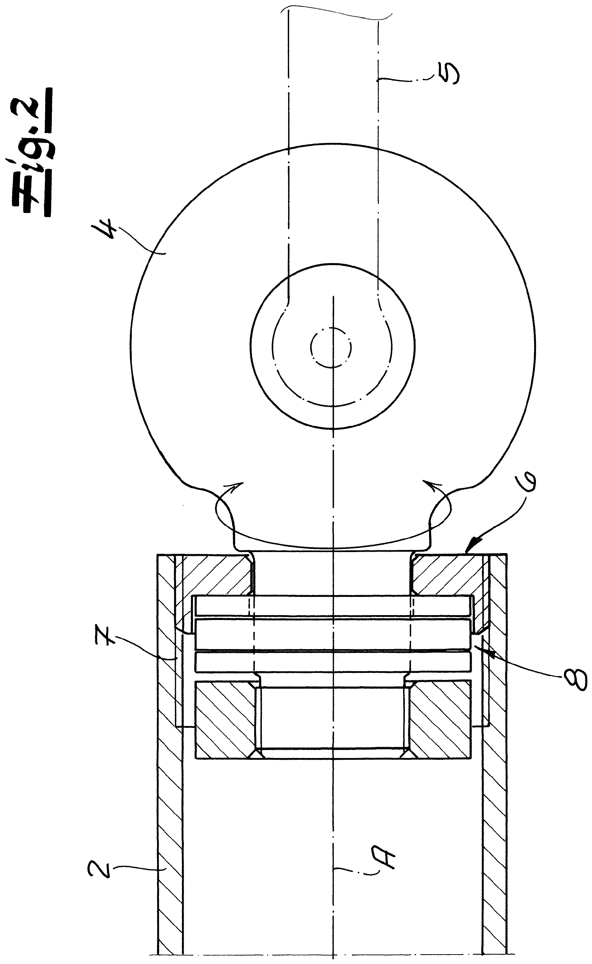

Die Drehung des Anschlusselementes 4 erschließt sich am besten anhand der vergrößerten Darstellung in der Fig. 2. Hier erkennt man, dass die Spannmutter 2 endseitig mit dem fraglichen drehbaren Anschlusselement bzw. der Spannöse 4 gekoppelt ist. Die Spannöse 4 lässt sich dabei um eine Achse A drehen, bei welcher es sich um die Längsachse A der Spannmutter 2 handelt. Das heißt, die Achse A der Drehbewegung des Spannelementes 4 fällt mit der Längsachse Ader Spannmutter 2 zusammen.

Dabei ist die Auslegung im Detail so getroffen, dass das Spannelement 4 drehbar in einem Anschlussblock 6 aufgenommen wird. Der Anschlussblock 6 wird dabei endseitig in die Spannmutter 2 und hierin ein ohnehin vorhandenes sowie angedeutetes Innengewinde 7 eingeschraubt. Mit dem Innengewinde 7 wechselwirkt am anderen Ende der Spannmutter 2 ebenfalls ein Außengewinde des in die Spannmutter 2 eintauchenden und mit ihr wechselwirkenden Gewindebolzens 3. Der Anschlussblock 6 ist in seinem Innern mit einem Lager 8 bzw. Drehlager ausgerüstet.

Bei dem Lager bzw. Drehlager 8 handelt es sich im Ausführungsbeispiel um ein Kugellager 8. Grundsätzlich kann an dieser Stelle auch mit einem Wälzlager, einem Gleitlager oder sogar Kombinationen gearbeitet werden. In jedem Fall sorgt das im Anschlussblock 6 vorhandene Drehlager 8 dafür, dass das Anschlusselement bzw. die Anschlussöse 4 die erforderlichen Drehbewegungen um die Achse bzw. Längsachse A der Spannmutter 2 vollführen kann, wie dies ein Doppelpfeil in der Fig. 2 andeutet. Das hat zur Folge, dass bei einem Spannvorgang an der Spannmutter 2 in die textile Kette 1 insgesamt keine Torsionen eingetragen werden.

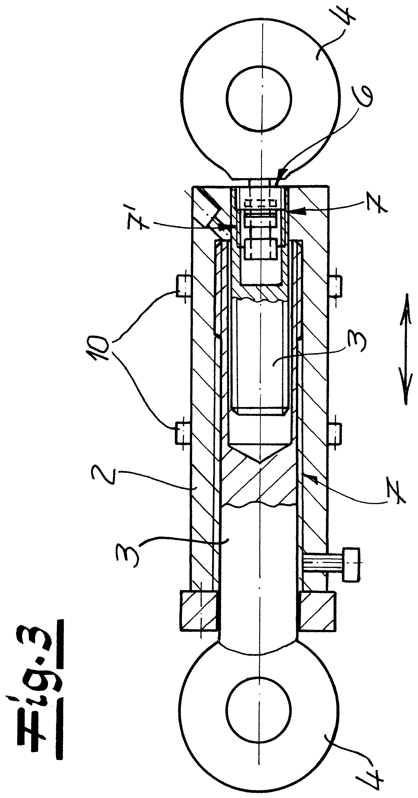

Tatsächlich ist die Spannmutter 2 mit einer angeschlossenen Ratsche 9, 10 ausgerüstet. Die Ratsche 9, 10 verfügt nicht nur über einen Spannhebel, sondern auch einen fest mit der Spannmutter 2 verbundenen Zahnkranz 10, den man einzeln und für sich betrachtet in der Fig. 3 erkennt. Zu diesem Zweck ist die Ratsche 9, 10 mit einer zusätzlichen und nicht ausdrücklich dargestellten Spannklinke ausgerüstet, welche an dem Zahnkranz 6 angreift, so dass die Spannmutter 2 mit Hilfe der Ratsche 9, 10 regelmäßig in einer Drehrichtung beaufschlagt wird, wohingegen die hierzu entgegengesetzte Drehrichtung der Ratsche 9, 10 zur Rückwärtsbewegung bzw. gegenläufigen Bewegung korrespondiert, bei welcher auf die Spannmutter 2 keine Drehbewegung ausgeübt wird. Jedenfalls sorgt die praktisch einseitige Drehbewegung mit Hilfe der Ratsche 9, 10 an der Spannmutter 2 dafür, dass der Gewindebolzen 3 zunehmend in die Spannmutter 2 eintaucht und hierbei die gewünschten Spannkräfte auf die textile Kette 1 ausübt.

Zusätzlich zu der Ratsche 9, 10 kann auch noch eine nicht ausdrücklich dargestellte Fixiereinrichtung realisiert werden, die an der Spannmutter 2 respektive dem Anschlusselement 4 und damit dem Gewindebolzen 3 angreifen kann, wie dies einleitend bereits beschrieben wurde. In der Fig. 3 ist dann noch eine Variante dergestalt wiedergegeben, dass zwei in die Spannmutter 2 eintauchende und mit ihr wechselwirkende Gewindebolzen 3 realisiert sind. Die Gewindebolzen 3 sind darüber hinaus so ausgelegt, dass der eine Gewindebolzen 3 in eine Hohlbohrung des anderen Gewindebolzens 3 zusätzlich eintauchen kann, um einen besonders langen Verstellweg der Spannvorrichtung zu realisieren, wie dies vergleichbar in der einleitend bereits genannten WO 2018/073098 A1 im Detail beschrieben wird. Außerdem ist die Auslegung in diesem Fall so getroffen, dass die beiden Gewindebolzen 3 in jeweils gegenläufige Gewindeabschnitte 7 der Spannmutter 2 eingreifen.

Im Rahmen des Ausführungsbeispiels wird so vorgegangen, dass das bewegliche bzw. drehbare Anschlusselement 4 lediglich an den Gewindebolzen 3 angeschlossen ist. Dazu ist der Anschlussblock 6 in ein Innengewinde 7' des Gewindebolzens 3 eingeschraubt. Demgegenüber verfügt der gegenüberliegende Gewindebolzen 3 über ein festes und nicht drehbares Anschlusselement bzw. eine entsprechende Anschlussöse 4. Grundsätzlich kann auch umgekehrt vorgegangen werden. Ebenso sind Varianten dergestalt denkbar, dass beide Anschlusselemente 4 jeweils drehbar ausgebildet sind. Das ist jedoch nicht dargestellt. Außerdem ist eine Variante mit lediglich einer drehbaren Anschlussöse 4 hinsichtlich der Handhabung besonders vorteilhaft, wobei in diesem Fall die drehbare Anschlussöse 4 an ein Ende der Spannmutter 2 angeschlossen ist, wie dies die Fig. 1 darstellt.

## Patentansprüche

1. Spannvorrichtung zum Spannen von Ketten (1), Bändern, Seilen oder dergleichen Spannmitteln (1), mit wenigstens einer rohrförmigen Spannmutter (2) sowie zumindest einem in die Spannmutter (2) eintauchenden und mit ihr wechselwirkenden Gewindebolzen (3), wobei
die Spannmutter (2) und/oder der Gewindebolzen (3) mit einem endseitigen Anschlusselement (4) insbesondere zur Kopplung mit dem Spannmittel (1) ausgerüstet ist, und wobei
das Anschlusselement (4) beweglich mit der Spannmutter (2) und/oder dem Gewindebolzen (3) verbunden ist,
**dadurch gekennzeichnet, dass**
das Anschlusselement (4) drehbar in einem Anschlussblock (6) aufgenommen wird, der endseitig in die Spannmutter (2) und ein hierin vorhandenes Innengewinde (7) eingeschraubt ist, wobei
am anderen Ende der Spannmutter (2) ebenfalls ein Außengewinde des in die Spannmutter (2) eintauchenden und mit ihr wechselwirkenden Gewindebolzens (3) mit dem Innengewinde (7) wechselwirkt, und wobei der Anschlussblock (6) in seinem Innern mit einem Lager (8) bzw. Drehlager (8) ausgerüstet ist.

2. Spannvorrichtung nach Anspruch 1, **dadurch gekennzeichnet, dass** das Anschlusselement (4) um eine in Längsrichtung verlaufende Achse (A) drehbar ausgebildet ist.

3. Spannvorrichtung nach Anspruch 2, **dadurch gekennzeichnet, dass** die Achse (A) mit der Längsachse (A) der Spannmutter (2) und/oder des Gewindebolzens (3) zusammenfällt.

4. Spannvorrichtung nach einem der Ansprüche 1 bis 3, **dadurch gekennzeichnet, dass** das Anschlusselement (4) unter Zwischenschaltung eines Lagers (8) mit der Spannmutter (2) gekoppelt ist.

5. Spannvorrichtung nach Anspruch 4, **dadurch gekennzeichnet, dass** das Lager (8) kopfseitig in die Spannmutter (2) eingesetzt ist.

6. Spannvorrichtung nach Anspruch 4 oder 5, **dadurch gekennzeichnet, dass** das Lager (8) als Drehlager (8) ausgebildet ist.

7. Spannvorrichtung nach Anspruch 6, **dadurch gekennzeichnet, dass** es sich bei dem Lager (8) um ein Kugellager, Wälzlager, Gleitlager etc. einzeln oder in Kombination handelt.

8. Spannvorrichtung nach einem der Ansprüche 1 bis 7, **dadurch gekennzeichnet, dass** das Anschlusselement (4) als Anschlussöse (4) ausgebildet ist.

9. Spannvorrichtung nach einem der Ansprüche 1 bis 8, **dadurch gekennzeichnet, dass** wenigstens eine an die Spannmutter angeschlossene Ratsche (9, 10) vorgesehen ist.

10. Spannvorrichtung nach Anspruch 9, **dadurch gekennzeichnet, dass** zusätzlich zur Ratsche (9, 10) eine Fixiereinrichtung vorgesehen ist.

11. Spannvorrichtung nach Anspruch 10, **dadurch gekennzeichnet, dass** die Fixiereinrichtung am Gewindebolzen (3) und/oder der Spannmutter (2) angreift.

## Claims

1. Tensioning device for tensioning chains (1), belts, cables or similar clamping means (1), with at least one tubular clamping nut (2) as well as at least one threaded bolt (3) entering into clamping nut (2) and interacting therewith, wherein
the clamping nut (2) and/or the threaded bolt (3) is/are provided with an end-side connecting element (4), more particularly for coupling to the clamping nut (1), and wherein
the connecting element (4) is moveably connected to the clamping nut (2) and/or the threaded bolt (3),
**characterised in that**
the connecting element (4) is rotatably incorporated in a connection block (6), which at the end is screwed into the clamping nut (2) and an internal thread (7) present therein, wherein
at the other end of the clamping nut (2), an external thread of the threaded bolt (3) entering into and interacting with the clamping nut (2) interacts with the internal thread (7), and wherein the connection block (6) is provided in its interior with a bearing (8) or pivot bearing (8).

2. Tensioning device according to claim 1, **characterised in that** the connecting element (4) is designed to be rotatable about an axis (A) extending in the longitudinal direction.

3. Tensioning device according to claim 2, **characterised in that** the axis (A) coincides with the longitudinal axis (A) of the clamping nut (2) and/or the threaded bolt (3).

4. Tensioning device according to any one of claims 1 to 3, **characterised in that** the connecting element (4) is connected to the clamping nut (2) with the interspersion of a bearing (8).

5. Tensioning device according to claim 4, **characterised in that** the head side of the bearing (8) is inserted into the clamping nut (2).

6. Tensioning device according to claim 4 or 5, **characterised in that** the bearing (8) is designed as a pivot bearing (8).

7. Tensioning device according to claim 6, **characterised in that** the beating (8) is a ball bearing, roller bearing, sliding bearing etc., individually or in combination.

8. Tensioning device according to any one of claims 1 to 7, **characterised in that** the connecting element (4) is designed as a connecting eyelet (4).

9. Tensioning device according to any one of claims 1 to 8, **characterised in that** at least one ratchet (9, 10) connected to the clamping nut is provided.

10. Tensioning device according to claim 9, **characterised in that** in addition to the ratchet (9, 10), a fixing device is provided.

11. Tensioning device according to claim 10, **characterised in that** the fixing device engages on the threaded bolt (3) and/or the clamping nut (2).

## Revendications

1. Dispositif tendeur, destiné à tendre des chaînes (1), des bandes, des câbles ou des moyens de tension (1) analogues, pourvu d'au moins un écrou de serrage (2) de forme tubulaire et d'au moins un boulon fileté (3) plongeant dans l'écrou de serrage (2) et en interaction avec celui-ci,
l'écrou de serrage (2) et / ou le boulon fileté (3) étant équipé d'un élément de raccordement (4) du côté extrémité, notamment pour l'accouplement avec le moyen de tension (1) et
l'élément de raccordement (4) étant assemblé de manière mobile avec l'écrou de serrage (2) et / ou avec le boulon fileté (3),
**caractérisé en ce que**
l'élément de raccordement (4) est réceptionné de manière rotative dans un bloc de raccordement (6) qui est vissé sur le côté extrémité dans l'écrou de serrage (2) et dans un taraudage (7) présent dans celui-ci,
sur l'autre extrémité de l'écrou de serrage (2), un filetage du boulon fileté (3) plongeant dans l'écrou de serrage (2) et en interaction avec celui-ci interagissant également avec le taraudage (7) et le bloc de raccordement (6) étant équipé en son intérieur d'un palier (8) ou d'un palier rotatif (8).

2. Dispositif tendeur selon la revendication 1, **caractérisé en ce que** l'élément de raccordement (4) est conçu de manière rotative autour d'un axe (A) s'écoulant dans la direction longitudinale.

3. Dispositif tendeur selon la revendication 2, **caractérisé en ce que** l'axe (A) coïncide avec l'axe longitudinal (A) de l'écrou de serrage (2) et / ou du boulon fileté (3).

4. Dispositif tendeur selon l'une quelconque des revendications 1 à 3, **caractérisé en ce que** l'élément de raccordement (4) est accouplé avec l'écrou de serrage (2) avec interposition d'un palier (8).

5. Dispositif tendeur selon la revendication 4, **caractérisé en ce que** le palier (8) est inséré du côté de la tête dans l'écrou de serrage (2).

6. Dispositif tendeur selon la revendication 4 ou 5, **caractérisé en ce que** le palier (8) est conçu sous la forme d'un palier rotatif (8).

7. Dispositif tendeur selon la revendication 6, caractérisé en ce le palier (8) est un roulement à billes, un roulement mécanique, un palier lisse, etc. individuellement ou en association.

8. Dispositif tendeur selon l'une quelconque des revendications 1 à 7, **caractérisé en ce que** l'élément de raccordement (4) est conçu sous la forme d'un œillet de raccordement (4).

9. Dispositif tendeur selon l'une quelconque des revendications 1 à 8, **caractérisé en ce qu'**il est prévu au moins un cliquet (9, 10) raccordé sur l'écrou de serrage.

10. Dispositif tendeur selon la revendication 9, **caractérisé en ce qu'**additionnellement au cliquet (9, 10), il est prévu un système de fixation.

11. Dispositif tendeur selon la revendication 10, **caractérisé en ce que** le système de fixation s'accroche sur le boulon fileté (3) et / ou sur l'écrou de serrage (2).
